# EUROPÄISCHE PATENTSCHRIFT

(11) **EP 3 318 764 B1**
(45) Veröffentlichungstag und Bekanntmachung des Hinweises auf die Patenterteilung: **11.11.2020**
(21) Anmeldenummer: 17207279.5
(22) Anmeldetag: 13.09.2006
(51) Int. Cl.: F04D 19/04, F04D 27/02, F04D 25/06, F04D 27/00

(54) **VAKUUMPUMPE MIT ÜBERDREHZAHLSICHERUNG**
VACUUM PUMP WITH OVERSPEED PROTECTION
POMPE À VIDE AVEC PROTECTION CONTRE UN EXCÈS DE VITESSE

(30) Priorität: 22.09.2005 DE 102005045283
(43) Veröffentlichungstag der Anmeldung: 09.05.2018
(62) Teilanmeldung aus: 06019123.6
(73) Patentinhaber: PFEIFFER VACUUM GMBH, 35614 Asslar (DE)
(72) Erfinder: Losch, Wolfgang, 35080 Bad Endbach (DE); Müller, André, verstorben (DE)
(74) Vertreter: Manitz Finsterwald Patent- und Rechtsanwaltspartnerschaft mbB

(56) Entgegenhaltungen:
- EP-A1- 0 939 228
- EP-A1- 1 211 774
- EP-A2- 1 311 047
- WO-A1-03/085268
- US-B1- 6 236 183

## Beschreibung

Die Erfindung betrifft ein Vakuumpumpsystem nach dem Oberbegriff des ersten Anspruches.

In den vergangenen Jahren haben sich bürstenlose Motoren mit permanentmagnetischem Rotor als Antriebe für Vakuumpumpen durchgesetzt, in denen Wellen mit hoher Drehzahl betrieben werden. Hierzu zählen beispielsweise Turbomolekularpumpen wie in der DE-OS 103 31 932 offenbart. Eine Gefahr geht bei solchen Vakuumpumpen von der in dem oder den Rotoren gespeicherten Energie aus. Sollte diese Energie bei einer Fehlfunktion der Vakuumpumpe frei - d.h. an die Umgebung abgegeben - werden, können große Schäden entstehen. Daher werden die Gehäuse der Vakuumpumpen so gestaltet, dass sie diese Energie im bestimmungsgemäßen Gebrauch aufnehmen können. Allerdings ist die im Rotor gespeicherte Energie abhängig von der Drehzahl Um die maximal gespeicherte Energie zu begrenzen, muss auch die Drehzahl auf einen höchsten zulässigen Wert begrenzt werden. Diese Drehzahlbegrenzung muss selbst dann gewährleistet sein, wenn die Steuerelektronik des Motors Fehlfunktionen unterliegt. Man spricht bei dieser Drehzahlbegrenzung auch von einem Überdrehzahlschutz.

Die DE-OS 102 15 896 schlägt daher vor, neben einem Mikrokontroller, der die unmittelbare Ansteuerung der Motorelektronik übernimmt, einen in der Vakuumpumpe angeordneten zweiten Mikrokontroller vorzusehen, der unter anderem den ersten Mikrokontroller überwacht. Nachteilig an dieser Lösung ist, dass eine Vielzahl von Bauteilen an und in der Vakuumpumpe notwendig ist. Die Anordnung von hochintegrierten elektronischen Bauteilen an der Pumpe selbst kann in manchen Anwendungen unzulässig sein, beispielsweise in Umgebungen mit einer hohen Intensität von Strahlung. Außerdem sind beide Mikrokontroller von nur einem Drehzahlsensor abhängig, der die Drehung des Rotors anzeigt, wodurch die Sicherheit gegen Fehlfunktionen eingeschränkt wird. Überdies kann die Verteilung der Elektronik auf Vakuumpumpe und Steuerelektronik zu einer Einschränkung der Austauschbarkeit von Elektronik und Vakuumpumpe führen, d.h. Vakuumpumpe und Elektronik können nicht beliebig kombiniert werden. Beispielsweise müssen die Funktionsweisen (bspw. der zugrunde liegende Code) der Mikrokontroller miteinander abgeglichen werden. Dies ist nicht nutzerfreundlich und schafft unnötige Kosten.

Die WO 03/085268 A1 offenbart ein Vakuumpumpsystem gemäß dem Oberbegriff sowohl von Anspruch 1 als auch von Anspruch 2. Aus der EP 1 311 047 A2 ist die Messung einer Motordrehzahl mittels Spannungen und Strömen bekannt. Die EP 0 939 228 A1 betrifft eine Antriebssteuerung für eine Turbomolekularpumpe. Weiterhin offenbart die EP 1 211 774 A1 eine Steuerung für einen Motor, bei welcher die Schaltsignale überprüft werden. Aus der US 6 236 183 B1 ist schließlich eine sensorlose Erfassung der Drehung von Elektromotoren bekannt.

Aufgabe der Erfindung ist es, ein Vakuumpumpsystem vorzustellen, bei dem die freie Kombinierbarkeit von Vakuumpumpe und Steuerelektronik gegeben und ein sicherer Überdrehzahlschutz gewährleistet ist.

Diese Aufgabe wird gelöst durch ein Vakuumpumpsystem mit den Merkmalen der unabhängigen Patentansprüche. Die Merkmale der Ansprüche drei bis zwölf stellen vorteilhafte Weiterbildungen der Erfindung dar.

Das Vakuumpumpsystem geht aus von einer Steuereinheit und einer Vakuumpumpe, wobei in der Steuereinheit ein Antriebsmikrokontroller eine Endstufe ansteuert und damit einen bürstenlosen, mehrphasigen Synchronmotor mit permanentmagnetisch erregtem Rotor in Drehung versetzt. Dieser Antriebsmikrokontroller schaltet vor Erreichen einer Überdrehzahl ab.

In dem erfindungsgemäßen Vakuumpumpsystem ist ein zweiter Mikrokontroller innerhalb der Steuereinheit angeordnet. In der Vakuumpumpe sind Pumpentyperkennungsmittel angeordnet, die von der Steuereinheit ausgewertet werden. Auf diese Art wird die für die Vakuumpumpe höchste zulässige Drehzahl ermittelt. Dem zweiten Mikrokontroller wird ein der Rotordrehzahl proportionales Signal zugeführt. Erkennt er, dass der Rotor die höchste zulässige Drehzahl überschreitet, schaltet er die Endstufe des Antriebes ebenfalls ab. Vorteilhaft an dieser Anordnung ist, dass nur wenige elektrische und elektronische Bauteile in der Vakuumpumpe selbst vorhanden sind, im Wesentlichen nur der Motor und die Pumpentyperkennungsmittel. Bei diesen handelt es sich im einfachsten Fall um elektrische Widerstände, deren Widerstandswert sich von Pumpentyp zu Pumpentyp unterscheidet. Auf diese Weise kann die Vakuumpumpe auch in solchen Umgebungen eingesetzt werden, in denen aufgrund von Strahlung eine hohe Belastung für die elektronischen Bauteile besteht. Da die Steuerelektronik selbst den Pumpentyp ermittelt, ist eine freie Kombinierbarkeit von Vakuumpumpe und Steuerelektronik gegeben. Aufwändige Reparaturen an der Vakuumpumpe bei Schäden an der Steuerelektronik entfallen, die defekte Steuerelektronik wird in ihrer Gesamtheit ausgetauscht. Damit werden Kosten beim Service eingespart. Diese Kombinierbarkeit erlaubt es auch, veraltete Steuerelektroniken durch neuere Modelle zu ersetzen, was im Stand der Technik erheblich schwieriger ist. Da innerhalb der Steuerelektronik ein zweiter Mikrokontroller angeordnet ist, der ebenfalls die Drehzahl überwacht und die Endstufe abschalten kann, ist ein sicherer Schutz vor Überschreiten der höchsten zulässigen Drehzahl gegeben.

In einer ersten vorteilhaften Weiterbildung der Erfindung werden im zweiten Mikrokontroller die in der Vakuumpumpe angeordneten Pumpentyperkennungsmittel ausgewertet und so die für die Vakuumpumpe höchste zulässige Drehzahl ermittelt. Diese teilt er dann dem Antriebsmikrokontroller mit, beispielsweise über eine serielle Datenschnittstelle. Dies erhöht die Sicherheit, da die Ermittlung der Höchstdrehzahl von dem eigentlichen Antriebsstrang entkoppelt wird. Es ist eine effiziente Gestaltung, da keine zusätzlichen Bauteile erforderlich sind.

In einer ersten Form der Erfindung bestimmt der Antriebsmikrokontroller die Drehzahl des Motors aus dem Motormodell und den sich in den Phasen einstellenden Ströme. Dieses erfindungsgemäße Merkmal beruht auf der Erkenntnis, dass sich ein Synchronmotor höchstens mit der Drehzahl dreht, mit der sich das durch die Spulenbestromung erzeugte Magnetfeld dreht. Damit können sowohl der Betrieb als auch der Schutz gegen Drehzahlüberschreitungen sensorlos aufgebaut werden. Hierdurch werden Sensoren an der Vakuumpumpe überflüssig, was die Bauteilzahl weiter reduziert.

In einer weiteren Ausführungsform bestimmt der zweite Mikrokontroller die Drehfrequenz aus einem Signal, welches aus der Messung der an den Phasen anliegenden Spannungen abgeleitet ist. Da die Drehzahlbestimmung aus zwei verschiedenen Messungen abgeleitet ist, liegt jedem Mikrokontroller ein eigenes Drehzahlsignal vor, so dass sich die Sicherheit der Überwachung erhöht. Insgesamt kann so eine redundante Überwachung aufgebaut werden, die durchgehend zweikanalig ist, d.h. für jeden Teil des Überwachungssystems gibt es einen zweiten Weg.

In einer weiteren Ausführungsform findet die der Drehzahlbestimmung dienende Messung der Ströme und Spannungen an den Phasen an Strom- und Spannungsmesspunkten innerhalb der Steuereinheit statt. Dies erhöht die Kombinierbarkeit der Steuereinheiten mit Vakuumpumpen und führt dazu, dass für den Antrieb nur noch Motor und Pumpentyperkennungsmittel in der Vakuumpumpe angeordnet sein müssen. Außerdem reduziert es die Anzahl der elektrischen Verbindungen, die zwischen Vakuumpumpe und Steuereinheit notwendig sind.

Vorteilhaft weiterbilden kann man die Erfindung, indem man die Leitung, über die der zweite Mikrokontroller die Endstufe abschaltet, auch mit einem Eingang des Antriebsmikrokontrollers verbindet. Dadurch erkennt der Antriebsmikrokontroller einen für ihn unzulässigen Betriebszustand und kann ein geregeltes Wiederaufstarten des Antriebes vorbereiten.

Ein weiteres Merkmal der Erfindung bezieht sich auf die Messung der Spannung in den Phasen. Diese Spannungen werden gemäß der Erfindung einem Teil des Antriebsmikrokontrollers mit einem Analog-zu-Digital-Wandler in ein digitales Signal umgewandelt, welches dann vom zweiten Mikrokontroller ausgewertet wird. Auf diese Weise werden zusätzliche Wandlerbauteile vermieden.

Mit Hilfe der Abbildung soll die Erfindung an einem Ausführungsbeispiel näher erläutert und die Vorteile derselben vertieft werden.

Die Abbildung zeigt:

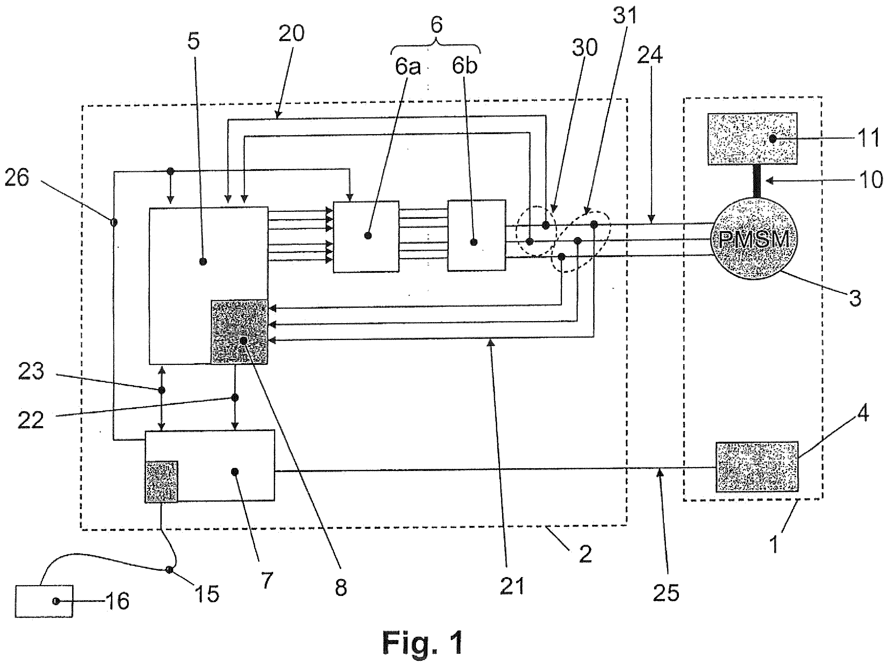

Fig. 1: Vereinfachtes Schema des Vakuumpumpsystems.

Ein vereinfachtes Schema eines beispielhaften und erfindungsgemäßen Vakuumpumpsystems ist in Figur 1 gezeigt. Die Vakuumpumpe 1 weist einen Motor 3 auf. Dieser ist als Permanent-Magnet-Synchron-Motor (PMSM) ausgebildet, d.h. der Rotor des Motors besitzt Permanentmagnete, die von am Motorstator angeordneten Spulen umgeben sind, welche ein sich drehendes magnetisches Feld erzeugen. An dieses Feld koppeln die Permanentmagnete magnetisch an, so dass der Rotor in Drehung versetzt wird. Der Rotor 10 steht in Verbindung mit der Rotorwelle des Pumpsystems 11 oder ist ein Teil von ihr. Die Vakuumpumpe weist Pumpentyperkennungsmittel 4 auf. Hierbei handelt es sich um elektronische Bauteile, beispielsweise ist ein Speicherchip denkbar. Noch einfacher und damit weniger fehleranfällig sind diese Mittel als einfache elektronische Bauteile wie z.B. elektrische Widerstände ausgeführt. Die verschiedenen Pumpentypen unterscheiden sich beispielsweise in Leistungsaufnahme des Antriebs, Saugvermögen und andere vakuumtechnische Daten, maximale Drehfrequenz, Trägheitsmomente des Rotors, u.s.w.

Die Steuereinheit 2 steht über Leitungen 24 und 25 mit der Vakuumpumpe in Verbindung. Diese Leitungen sind Bestandteil eines oder mehrerer Kabel. Die Steuereinheit kann an die Vakuumpumpe anflanschbar ausgeführt sein. In diesem Falle können die Leitungen 24 und 25 durch einen Steckkontakt ersetzt werden, so dass kein Kabel zwischen den Komponenten notwendig ist.

Innerhalb der Steuereinheit sind der Antriebsmikrokontroller 5 und die Endstufe angeordnet, wobei die Endstufe 6 aus den Komponenten Endstufenansteuerung 6a und Leistungsteil 6b gebildet werden. Der Antriebsmikrokontroller steuert den Antrieb, d.h. er berechnet die vorzunehmende Kommutierung, sorgt für den Anlauf des Motors von Stillstand auf Nenndrehzahl und führt die Drehzahl- und Stromregelung durch. Dazu bedient er sich eines Motormodells, welches anhand der physikalischen Daten das drehende System (Rotor, Welle, Antrieb) beschreibt und innerhalb des Antriebsmikrokontrollers simuliert. Weiterhin bedient er sich den gemessenen Strömen, die sich in Phasen einstellen. Diese Daten sind tabellarisch in einem Speicher abgelegt, da sie vom Pumpentyp abhängen, und werden nach Bestimmung des Pumpentyps in den Antriebskontroller übernommen Die Daten können in einem, ebenfalls in der Steuereinheit angeordneten, zweiten Mikrokontroller oder einem seperaten Speicher abgelegt sein. Bei Ausfall der Spannungsversorgung des Vakuumpumpsystems steuert der Antriebskontroller den generatorischen Betrieb des Motors zur Versorgung der Steuerelektronik. Die Endstufe 6 ist mehrstufig ausgeführt, im Beispiel mit zwei Stufen, die im Wesentlichen eine Signalverstärkung von den niedrigen Leistungspegeln des Antriebsmikrokontrollers auf die notwendigen hohen Leistungspegel des Motors vornehmen. Sie wird in an sich bekannter Weise (hier nicht gezeigt) von einem Netzteil mit einer Zwischenkreisspannung versorgt.

Im gezeigten Ausführungsbeispiel ist der Motor dreiphasig. An zwei dieser Phasen wird eine Strommessung vorgenommen, welche über die Verbindung 20 an den Antriebskontroller zurückgeführt wird. Das Ergebnis dieser Messung wird zusammen mit den auf die Phasen geschalteten Spannungen im Antriebskontroller mit den Werten verglichen, die mit dem Motormodell berechnet worden sind.

Schließt der Antriebskontroller aus diesem Vergleich auf eine höhere aktuelle Drehzahl als für den Pumpentyp erlaubt ist, schaltet er die Endstufe ab. Die Strommessung dient außerdem dazu, eine Stromregelschleife aufzubauen. Diese ist notwendig, da der Stromfluss in den Spulen die Stärke der magnetischen Kopplung zwischen Spulen und Rotor bestimmt. Einerseits muss diese Kopplung stark genug sein, um ein sicheres Drehen des Rotors auch unter Lasten zu gewährleisten, andererseits muss der Stromfluss auf einen Maximalwert begrenzt werden. An allen drei Phasen wird die Spannung gemessen und einer Wandlereinheit 8 zugeführt, in der das analoge Spannungssignal in ein digitales Spannungssignal umgewandelt wird. Die Wandlereinheit ist Bestandteil des Antriebskontrollers 5, da auf diese Weise für die Wandlung dieselbe Zeitbasis verwendet wird wie für die Ansteuerung der Endstufe. Das digitalisierte Signal wird über eine Leitung 22 dem zweiten Mikrokontroller zur Verfügung gestellt. Im Zuge einer redundanten Gestaltung kann das Signal über mehrere parallele Leitungen übertragen werden. Im einfachsten Fall ist dieses Signal ein Rechtecksignal mit einer Frequenz, die der aktuellen Drehfrequenz entspricht. Zur Sicherheit kann diese Leitung zweikanalig ausgeführt sein. Aus dem digitalisierten Signal bestimmt der zweite Kontroller 7 die Drehfrequenz. Beispielsweise kann er die Zahl der Rechteckimpulse in einem Zeitintervall bestimmen.

Der zweite Mikrokontroller wertet die Pumpentyperkennungsmittel 4 aus und entnimmt aus seinem Speicher die für den erkannten Pumpentyp erlaubte höchste Drehzahl. Vorteilhaft wird, um eine Zweikanaligkeit auch an dieser Stelle zu erreichen, diese zusätzlich durch den Pumpenbenutzer per Hand eingegeben und beide Werte verglichen. Zur Handeingabe dient ein Handgerät 16, welches über ein Kabel 15 mit der Steuerelektronik verbunden ist. Nur bei Übereinstimmung ist der Antrieb zum Start und Betrieb freigegeben.

Die Strom- und die Spannungsmessungen erfolgen an Strommesspunkten 30 und Spannungsmesspunkten 31 innerhalb der Steuereinheit 2, wodurch eine hohe Austauschbarkeit von Steuereinheit und Vakuumpumpe gegeben ist. Es müssen zudem keine Leitungen und/oder Steckverbindungen vorgesehen werden, über die die Messsignale von Vakuumpumpe in die Steuereinheit geführt werden. Im Wesentlichen sind zum Betrieb des Antriebs nur Leitungen oder Steckverbindungen für die Antriebsphasen und die Pumpentyperkennungsmittel vorzusehen, was eine erhebliche Kostenreduktion mit sich bringt. Mit dem Motormodell ist es außerdem möglich, sinusförmig bestromte Motoren innerhalb der Vakuumpumpe einzusetzen, ohne Sensoren vorsehen zu müssen. Diese Motoren weisen viel gleichmäßigere Laufeigenschaften als beispielsweise blockkummutierte Motoren auf, da es keine unstetigen Kraftvektoränderungen gibt. Insgesamt entsteht so ein sensorloses, redundantes Antriebssystem.

Die Mikrokontroller stehen über eine serielle Datenleitung miteinander in Verbindung. Über diese werden Stellkommandos und Statusabfragen durchgeführt, außerdem teilt der zweite Mikrokontroller dem Antriebsmikrokontroller hierüber mit, welche Drehzahl höchstens erreicht werden darf. Auch die dem Motormodell zugrunde liegenden pumpenspezifischen Daten können über diesen Kanal übermittelt werden. Misst der zweite Kontroller 7, dass das über die Leitung 22 übermittelte Signal einer Drehzahl der Pumpe oberhalb des zulässigen Wertes entspricht oder die Drehzahl in unzulässigem Maße von derjenigen über die serielle Verbindung 23 übertragenen abweicht, schaltet er über die Leitung 26 die Endstufe 6 ab.

In einer vorteilhaften Ausführung wird diese Leitung auch mit einem Eingang des Antriebsmikrokontrollers verbunden, so dass dieser die Abschaltung der Endstufe feststellen kann. Er kann eine gezielte und an den Motorzustand (z.B. Drehzahl) angepasste Wiederinbetriebnahme bei jeder Rotordrehzahl vorbereiten.

Vakuumpumpsysteme werden oftmals von einer zentralen Stelle aus überwacht, wozu elektronische Bussysteme eingesetzt werden Hinzu kommen Komponenten wie beispielsweise Heizungs- und Kühleinrichtungen, die geregelt werden müssen. Diese Aufgaben können von dem zweiten Mikrokontroller übernommen werden.

## Patentansprüche

1. Vakuumpumpsystem mit einer Vakuumpumpe (1), einer Steuereinheit (2) und einem zweiten, die Drehzahl des Motors überwachenden Mikrokontroller, wobei die Vakuumpumpe einen bürstenlosen, mehrphasigen Synchronmotor (3) mit permanentmagnetisch erregtem Rotor aufweist, wobei die Steuereinheit einen Antriebsmikrokontroller (5) und eine Endstufe (6a, 6b) enthält, und wobei der zweite Mikrokontroller (7) konfiguriert ist, bei Erkennen des Überschreitens einer Höchstdrehzahl die Endstufe (6a, 6b) abzuschalten,
**dadurch gekennzeichnet, dass**
der zweite Mikrokontroller (7) in der Steuereinheit (2) angeordnet ist,
die Vakuumpumpe (1) Pumpentyperkennungsmittel (4) aufweist, und
der Antriebsmikrokontroller (5) konfiguriert ist, die Drehzahl des Motors aus einem Motormodell und den sich in den Phasen einstellenden Strömen zu bestimmen,
wobei eine Wandlereinheit (8) zur Wandlung der an den Phasen gemessenen Spannungen in ein digitales Signal im Antriebsmikrokontroller (5) angeordnet ist, wobei das digitale Signal im zweiten Mikrokontroller (7) ausgewertet wird.

2. Vakuumpumpsystem mit einer Vakuumpumpe (1), einer Steuereinheit (2) und einem zweiten, die Drehzahl des Motors überwachenden Mikrokontroller, wobei die Vakuumpumpe einen bürstenlosen, mehrphasigen Synchronmotor (3) mit permanentmagnetisch erregtem Rotor aufweist, wobei die Steuereinheit einen Antriebsmikrokontroller (5) und eine Endstufe (6a, 6b) enthält und wobei der zweite Mikrokontroller (7) konfiguriert ist, bei Erkennen des Überschreitens einer Höchstdrehzahl die Endstufe (6a, 6b) abzuschalten,
**dadurch gekennzeichnet, dass**
der zweite Mikrokontroller (7) in der Steuereinheit (2) angeordnet ist,
die Vakuumpumpe (1) Pumpentyperkennungsmittel (4) aufweist, und
der Antriebsmikrokontroller (5) konfiguriert ist, die Drehzahl aus einem Teil der an den Phasen anliegenden Spannungen und der sich in den Phasen einstellenden Ströme zu bestimmen,
wobei eine Wandlereinheit (8) zur Wandlung der an den Phasen gemessenen Spannungen in ein digitales Signal im Antriebsmikrokontroller (5) angeordnet ist, wobei das digitale Signal im zweiten Mikrokontroller (7) ausgewertet wird.

3. Vakuumpumpsystem nach Anspruch 1, **dadurch gekennzeichnet, dass** der Antriebsmikrokontroller (5) konfiguriert ist, die Drehzahl aus einem Teil der an den Phasen anliegenden Spannungen und der sich in den Phasen einstellenden Ströme zu bestimmen.

4. Vakuumpumpsystem nach Anspruch 1, 2 oder 3, **dadurch gekennzeichnet, dass** der zweite Mikrokontroller (7) konfiguriert ist, die in der Vakuumpumpe angeordneten Pumpentyperkennungsmittel (4) auszuwerten und daraus die höchste für die Vakuumpumpe zulässige Drehzahl zu ermitteln.

5. Vakuumpumpsystem nach Anspruch 2 oder 4, **dadurch gekennzeichnet, dass** der zweite Mikrokontroller konfiguriert ist, die Drehzahl aus einem Signal zu bestimmen, welches aus der Messung der an den Phasen anliegenden Spannungen abgeleitet ist.

6. Vakuumpumpsystem nach einem der vorherigen Ansprüche, **dadurch gekennzeichnet, dass** der Drehzahlbestimmung dienende Strommesspunkte (30) und Spannungsmesspunkte (31) innerhalb der Steuereinheit (2) angeordnet sind.

7. Vakuumpumpsystem nach einem der vorherigen Ansprüche, **dadurch gekennzeichnet, dass** die der Abschaltung der Endstufe dienende Leitung (26) eine Verbindung mit einem Eingang am Antriebsmikrokontroller (5) hat.

8. Vakuumpumpsystem nach einem der vorherigen Ansprüche, **dadurch gekennzeichnet, dass** der Antriebsmikrokontroller (5) konfiguriert ist, vor Erreichen einer Überdrehzahl abzuschalten.

9. Vakuumpumpsystem nach einem der vorherigen Ansprüche, **dadurch gekennzeichnet, dass** der Antriebsmikrokontroller (5) konfiguriert ist, bei Ausfall einer Spannungsversorgung des Vakuumpumpsystems einen generatorischen Betrieb des Motors zur Versorgung einer Steuerelektronik zu steuern.

10. Vakuumpumpsystem nach einem der vorherigen Ansprüche, **dadurch gekennzeichnet, dass** das Motormodell ein drehendes System der Vakuumpumpe (1) beschreibt, wobei das Motormodell insbesondere innerhalb des Antriebsmikrokontrollers (5) simuliert wird.

11. Vakuumpumpsystem nach einem der vorherigen Ansprüche, **dadurch gekennzeichnet, dass** innerhalb der Steuereinheit (2) eine Endstufe (6) angeordnet ist, welche mehrstufig ausgeführt ist.

12. Vakuumpumpsystem nach einem der vorherigen Ansprüche, **dadurch gekennzeichnet, dass** die Wandlereinheit (8) ein Bestandteil des Antriebsmikrokontrollers (5) ist, wobei der Wandlereinheit (8) die an den Phasen gemessenen Spannungen zugeführt werden, wobei die Wandlereinheit (8) konfiguriert ist, dieses analoge Spannungssignal in ein digitales Spannungssignal umzuwandeln.

## Claims

1. A vacuum pump system comprising a vacuum pump (1), a control unit (2), and a second microcontroller monitoring the revolution speed of the motor, wherein the vacuum pump has a brushless, multiphase synchronous motor (3) with a permanent magnetically excited rotor, wherein the control unit includes a drive microcontroller (5) and an end stage (6a, 6b), and wherein the second microcontroller (7) is configured to switch off the end stage (6a, 6b) on a recognition of the exceeding of a maximum revolution speed, **characterized in that**
the second microcontroller (7) is arranged in the control unit (2);
**in that** the vacuum pump (1) has pump type recognition means (4); and
**in that** the drive microcontroller (5) is configured to determine the revolution speed of the motor from a motor model and from the currents adopted in the phases,
with a converter unit (8) for converting the voltages measured at the phases into a digital signal being arranged in the drive microcontroller (5), and with the digital signal being evaluated in the second microcontroller (7).

2. A vacuum pump system comprising a vacuum pump (1), a control unit (2), and a second microcontroller monitoring the revolution speed of the motor, wherein the vacuum pump has a brushless, multiphase synchronous motor (3) with a permanent magnetically excited rotor, wherein the control unit includes a drive microcontroller (5) and an end stage (6a, 6b), and wherein the second microcontroller (7) is configured to switch off the end stage (6a, 6b) on a recognition of the exceeding of a maximum revolution speed,
**characterized in that**
the second microcontroller (7) is arranged in the control unit (2); **in that** the vacuum pump has pump type recognition means (4); and **in that** the drive microcontroller (5) is configured to determine the revolution speed from some of the voltages applied at the phases and of the currents adopted in the phases,
with a converter unit (8) for converting the voltages measured at the phases into a digital signal being arranged in the drive microcontroller (5), and with the digital signal being evaluated in the second microcontroller (7).

3. A vacuum pump system in accordance with claim 1, **characterized in that** the drive microcontroller (5) is configured to determine the revolution speed from some of the voltages applied at the phases and of the currents adopted in the phases.

4. A vacuum pump system in accordance with claim 1, claim 2 or claim 3, **characterized in that** the second microcontroller (7) is configured to evaluate the pump type recognition means (4) arranged in the vacuum pump (1) and to determine the maximum revolution speed permitted for the vacuum pump therefrom.

5. A vacuum pump system in accordance with claim 2 or claim 4, **characterized in that** the second microcontroller is configured to determine the revolution speed from a signal which is derived from the measurement of the voltages applied at the phases.

6. A vacuum pump system in accordance with any one of the preceding claims, **characterized in that** current measurement points (30) and voltage measurement points (31) serving for the determination of the revolution speed are arranged within the control unit (2).

7. A vacuum pump system in accordance with any one of the preceding claims, **characterized in that** the line (26) serving for the switching off of the end stage has a connection to an input at the drive microcontroller (5).

8. A vacuum pump system in accordance with any one of the preceding claims, **characterized in that** the drive microcontroller (5) is configured to switch off before an overspeed is reached.

9. A vacuum pump system in accordance with any one of the preceding claims, **characterized in that** the drive microcontroller (5) is configured to control a generator operation of the motor to supply control electronics on a failure of a supply voltage of the vacuum pump system.

10. A vacuum pump system in accordance with any one of the preceding claims, **characterized in that** the motor model describes a rotating system of the vacuum pump (1), with the motor model in particular being simulated within the drive microcontroller (5).

11. A vacuum pump system in accordance with any one of the preceding claims, **characterized in that** an end stage (6), which is designed with multiple stages, is arranged within the control unit (2).

12. A vacuum pump system in accordance with any one of the preceding claims, **characterized in that** the converter unit (8) is a component of the drive microcontroller (5), with the voltages measured at the phases being supplied to the converter unit (8), and with the converter unit (8) being configured to convert this analog voltage signal into a digital voltage signal.

## Revendications

1. Système de pompe à vide comportant une pompe à vide (1), une unité de commande (2) et un second microcontrôleur surveillant la vitesse de rotation du moteur,
dans lequel
la pompe à vide comprend un moteur synchrone polyphasé (3) sans balais à rotor excité par aimant permanent,
l'unité de commande comprend un microcontrôleur d'entraînement (5) et un étage final (6a, 6b), et
le second microcontrôleur (7) est configuré pour couper l'étage final (6a, 6b) lors de la reconnaissance du dépassement d'une vitesse de rotation maximale,
**caractérisé en ce que**
le second microcontrôleur (7) est agencé dans l'unité de commande (2), la pompe à vide (1) comprend des moyens de reconnaissance de type de pompe (4), et
le microcontrôleur d'entraînement (5) est configuré pour définir la vitesse de rotation du moteur à partir d'un modèle de moteur et des courants qui s'établissent dans les phases,
une unité de conversion (8) pour convertir les tensions mesurées aux phases en un signal numérique étant agencée dans le microcontrôleur d'entraînement (5), et
le signal numérique étant évalué dans le second microcontrôleur (7).

2. Système de pompe à vide comportant une pompe à vide (1), une unité de commande (2) et un second microcontrôleur surveillant la vitesse de rotation du moteur,
dans lequel
la pompe à vide comprend un moteur synchrone polyphasé (3) sans balais à rotor excité par aimant permanent,
l'unité de commande comprend un microcontrôleur d'entraînement (5) et un étage final (6a, 6b), et
le second microcontrôleur (7) est configuré pour couper l'étage final (6a, 6b) lors de la reconnaissance du dépassement d'une vitesse de rotation maximale,
**caractérisé en ce que**
le second microcontrôleur (7) est agencé dans l'unité de commande (2), la pompe à vide (1) comprend des moyens de reconnaissance de type de pompe (4), et
le microcontrôleur d'entraînement (5) est configuré pour définir la vitesse de rotation à partir d'une partie des tensions appliquées aux phases et des courants qui s'établissent dans les phases,
une unité de conversion (8) pour convertir les tensions mesurées aux phases en un signal numérique étant agencée dans le microcontrôleur d'entraînement (5), et
le signal numérique étant évalué dans le second microcontrôleur (7).

3. Système de pompe à vide selon la revendication 1,
**caractérisé en ce que**
le microcontrôleur d'entraînement (5) est configuré pour définir la vitesse de rotation à partir d'une partie des tensions appliquées aux phases et des courants qui s'établissent dans les phases.

4. Système de pompe à vide selon la revendication 1, 2 ou 3,
**caractérisé en ce que**
le second microcontrôleur (7) est configuré pour évaluer les moyens de reconnaissance de type de pompe (4) agencés dans la pompe à vide (1) et pour déterminer ainsi la vitesse de rotation maximale admissible pour la pompe à vide.

5. Système de pompe à vide selon la revendication 2 ou 4,
**caractérisé en ce que**
le second microcontrôleur est configuré pour définir la vitesse de rotation à partir d'un signal qui est dérivé de la mesure des tensions appliquées aux phases.

6. Système de pompe à vide selon l'une des revendications précédentes,
**caractérisé en ce que**
des points de mesure de courant (30) et des points de mesure de tension (31) servant à définir la vitesse de rotation sont agencés à l'intérieur de l'unité de commande (2).

7. Système de pompe à vide selon l'une des revendications précédentes,
**caractérisé en ce que**
la ligne (26) servant à couper l'étage final présente une connexion à une entrée du microcontrôleur d'entraînement (5).

8. Système de pompe à vide selon l'une des revendications précédentes,
**caractérisé en ce que**
le microcontrôleur d'entraînement (5) est configuré pour couper avant d'atteindre une survitesse de rotation.

9. Système de pompe à vide selon l'une des revendications précédentes,
**caractérisé en ce que**
le microcontrôleur d'entraînement (5) est configuré pour commander un fonctionnement générateur du moteur pour alimenter une unité électronique de commande en cas de défaillance d'une alimentation en tension du système de pompe à vide.

10. Système de pompe à vide selon l'une des revendications précédentes,
**caractérisé en ce que**
le modèle de moteur décrit un système en rotation de la pompe à vide (1), le modèle de moteur étant simulé en particulier à l'intérieur du microcontrôleur d'entraînement (5).

11. Système de pompe à vide selon l'une des revendications précédentes,
**caractérisé en ce que**
un étage final (6) est agencé à l'intérieur de l'unité de commande (2), qui est réalisé de manière multi-étagée.

12. Système de pompe à vide selon l'une des revendications précédentes,
**caractérisé en ce que**
l'unité de conversion (8) est un composant du microcontrôleur d'entraînement (5), les tensions mesurées aux phases étant amenées à l'unité de conversion (8), l'unité de conversion (8) étant configurée pour convertir ce signal de tension analogique en un signal de tension numérique.
